# EUROPEAN PATENT APPLICATION

(11) **EP 4 769 983 A1**
(43) Date of publication of application: **01.07.2026**
(21) Application number: 24870345.6
(22) Date of filing: 02.09.2024
(51) Int. Cl.: H04J 3/06

(54) **STATE SWITCHING METHOD AND APPARATUS, AND ELECTRONIC DEVICE**

(30) Priority: 26.09.2023 CN 202311267629
(71) Applicant: Sanechips Technology Co., Ltd., Shenzhen, Guangdong 518055 (CN)
(72) Inventor: WANG, Cheng, Shenzhen, Guangdong 518055 (CN); LUO, Hao, Shenzhen, Guangdong 518055 (CN); ZHU, Wentao, Shenzhen, Guangdong 518055 (CN); YANG, Yi, Shenzhen, Guangdong 518055 (CN); ZHU, Xiaoge, Shenzhen, Guangdong 518055 (CN); ZHU, Haipeng, Shenzhen, Guangdong 518055 (CN); LUO, Jialiang, Shenzhen, Guangdong 518055 (CN)
(74) Representative: Canzler & Bergmeier Patentanwälte Partnerschaft mbB
(86) International application number: PCT/CN2024/116327
(87) International publication number: WO 2025/066799

(57) **Abstract**

Embodiments of the present application provide a state switching method and apparatus, and an electronic device. The state switching method comprises: when a preset state switching condition is satisfied, generating and maintaining a state switching signal; using the state switching signal to perform state switching on a target object; calculating a time interval between a current moment and an ending moment of a synchronous alignment signal, wherein the synchronous alignment signal is a signal applied to the target object and earlier than the state switching signal; and when the time interval satisfies a preset condition, ending the state switching signal to complete state switching of the target object, wherein the preset condition comprises that the time interval is an even multiple of a first clock period. The solution of the embodiments synchronizes the output signal of the target object after state switching is performed with the synchronous alignment signal, thereby solving the problem of timing sequence disorder, and improving the circuit performance.

## Description

### CROSS REFERENCE TO RELATED DISCLOSURE

The present disclosure claims the priority to Chinese Patent Application No. 202311267629.8 entitled "STATE SWITCHING METHOD AND APPARATUS, AND ELECTRONIC DEVICE" and filed with the CNIPA on September 26, 2023, the contents of which are incorporated herein by reference in their entirety.

### TECHNICAL FIELD

Embodiments of the present disclosure relate to, but are not limited to, the technical field of integrated circuits, and in particular, to a state switching method and apparatus, and an electronic device.

### BACKGROUND

The 5^{th} generation mobile communication network (5G) communication technology has developed rapidly in recent years, and poses higher and higher requirements on power consumption specifications of a system. A high-speed high- precision Digital to Analog Converter (DAC) is an important component of a radio frequency transceiving system, and power consumption of the DAC has great significance to power consumption of the whole system. When a communication system operates in a Time Division Duplexing (TDD) mode, a transmitter and a receiver share one radio frequency point, and uplink communication and downlink communication are performed using different time slots. Therefore, part of circuits may be turned off in a time slot in which the DAC does not transmit data (also called Sleep Mode), so as to reduce power consumption.

### SUMMARY

The embodiments of the present disclosure provide a state switching method and apparatus, and an electronic device.

In the first aspect, an embodiment of the present disclosure provides a state switching method, including: generating and maintaining a state switching signal in a case where a preset state switching condition is met; performing state switching on a target object with the state switching signal; calculating a time interval between a current time and an end time of a synchronization alignment signal, wherein the synchronization alignment signal is a signal applied to the target object earlier than the state switching signal; and in a case where the time interval meets a preset condition, ending the state switching signal, wherein the preset condition includes: the time interval being an even multiple of a first clock period.

In the second aspect, an embodiment of the present disclosure provides a state switching apparatus, including: a state switching unit, which is configured to implement the state switching method.

In the third aspect, an embodiment of the present disclosure provides an electronic device, including the state switching apparatus.

### BRIEF DESCRIPTION OF DRAWINGS

In the drawings of the embodiments of the present disclosure:
FIG. 1 is a block diagram of a DAC in the related technology;
FIG. 2 is a block diagram of a clock path in the related technology;
FIG. 3 is a flowchart illustrating a state switching method according to an embodiment of the present disclosure;
FIG. 4 is a schematic structural diagram of a quadrature divide-by-2 frequency divider according to an embodiment of the present disclosure;
FIG. 5 is a timing diagram of the frequency divider shown in FIG. 4 according to an embodiment of the present disclosure;
FIG. 6 is a block diagram of a state switching apparatus according to an embodiment of the present disclosure;
FIG. 7 is a schematic diagram of connections of a state switching apparatus in a case where a target object is a frequency divider and synchronization is performed on a plurality of types of frequency divided signals with one state switching apparatus according to an embodiment of the present disclosure;
FIG. 8 is a schematic diagram of connections of a state switching apparatus in a case where a target object is a frequency divider and synchronization is performed on one type of frequency divided signal with one state switching apparatus according to an embodiment of the present disclosure;
FIG. 9 is a timing diagram illustrating a divide-by-2 frequency divider being automatically reset with a state switching apparatus in a TDD mode according to an embodiment of the present disclosure;
FIG. 10 is a schematic diagram of connections of a state switching apparatus with addition of a synchronization alignment signal generation circuit according to an embodiment of the present disclosure; and
FIG. 11 is a block diagram of an electronic device according to an embodiment of the present disclosure.

### DETAIL DESCRIPTION OF EMBODIMENTS

In order to enable those of ordinary skill in the art to better understand the technical solutions of the present disclosure, a communication perception data processing method and a computer-readable storage medium according to the embodiments of the present disclosure are described in detail below with reference to the drawings.

The present disclosure will be described more fully below with reference to the drawings, but the embodiments illustrated may be embodied in different forms, and the present disclosure should not be interpreted as being limited to the embodiments described below. Rather, the embodiments are provided to make the present disclosure thorough and complete, and are intended to enable those of ordinary skill in the art to fully understand the scope of the present disclosure.

The drawings for the embodiments of the present disclosure are intended to provide a further understanding of the embodiments of the present disclosure and constitute a part of the specification. Together with the specific embodiments of the present disclo sure, the drawings are used to explain the present disclosure, but do not constitute any limitation to the present disclosure. The above and other features and advantages will become more apparent to those of ordinary skill in the art from the description of the specific embodiments with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the embodiments of the present disclosure and the features therein may be combined with each other if no conflict is incurred.

The terms used herein are merely used to describe the specific embodiments, and are not intended to limit the present disclosure. The term "and/or" used herein includes any and all combinations of one or more associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

The present disclosure is not limited to the embodiments illustrated by the drawings, but includes modifications to configuration formed based on a manufacturing process. Thus, regions shown in the drawings are illustrative, and shapes of the regions shown in the drawings illustrate specific shapes of regions of elements, but are not intended to make limitations.

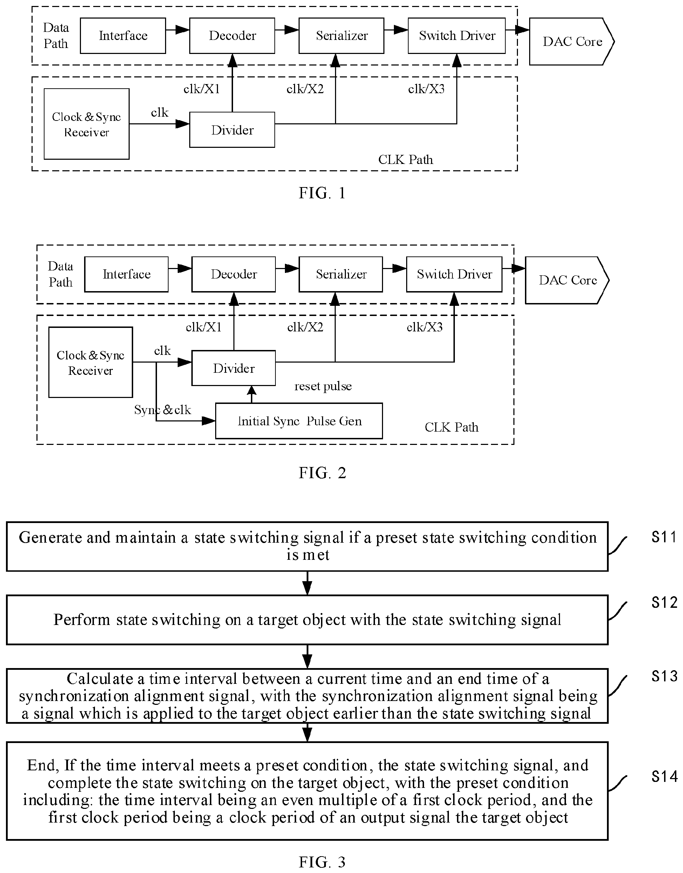

FIG. 1 is a block diagram of a DAC, which includes a data link (Data Path), a clock link (CLK Path), and a DAC core circuit (DAC Core); and the data link (Data Path) includes an interface circuit (Interface), a digital data link (Digital Data Path), a decoder (Decoder), a serializer (Serializer), and a switch driver (Switch Driver), the clock link includes a clock and synchronization signal receiver (Clock&Sync Receiver), a frequency divider (Divider), and a plurality of clock drivers, and the DAC core circuit (DAC Core) includes a plurality of DAC core units (DAC Core Slices). In a clock path, a clock signal (CLK) transmitted from a Phase Locked Loop (PLL) is driven to be transmitted to the frequency divider (Divider), and a frequency-divided clock is transmitted to the decoder (Decoder) (×1 frequency division), the serializer (Serializer) (×2 frequency division), and the switch driver (Switch Driver) (×3 frequency division). In a TDD mode, if the clock path is closed, power consumption of the clock path and power consumption of application circuits of the clock path may be greatly reduced.

FIG. 2 is a block diagram of a conventional clock path. The PLL sends a reference synchronization signal and the clock signal, the reference synchronization signal and the clock signal are received by the clock and synchronization signal receiver (Clock&Sync Receiver), then an initialization synchronization pulse generation module (Initial Sync Pulse Gen) generates a reset pulse signal (reset pulse) to reset the frequency divider (Divider), so as to ensure that clock phases in different frequency domains have a definite relationship, and further ensure a fixed data and sampling clock phase relationship among the decoder (Decoder), the serializer (Serializer), and the switch driver (Switch Driver). The conventional clock path is faced with the following problem: in a case where the system operates in the TDD mode, when a transmitter is switched from a sleep time slot to a normal operating time slot, a clock of the frequency divider (Divider) is also restored from an off state; due to an uncertain starting time of the switching of the transmitter to the normal operating time slot, a phase of a frequency division clock is changed, such that a data and clock phase relationship among the decoder (Decoder), the serializer (Serializer), and the switch driver (Switch Driver) is uncertain, causing a timing problem and deteriorating DAC performance.

With the state switching method provided in the embodiments of the present disclosure, when a state switching signal (e.g., a first reset signal for waking up the frequency divider (Divider)) is applied to a target object (e.g., the frequency divider (Divider)), a time interval between an end time of the state switching signal and an end time of a synchronization alignment signal (e.g., the reset pulse signal (reset pulse)) is made to be an even multiple of a first clock period (e.g., a divide-by-2 clock period, a divide-by-4 clock period, or a divide-by-6 clock period) of an output signal of the target object, so that a phase of the output signal of the target object is aligned with a phase of the synchronization alignment signal after the target object is subjected to state switching, which can solve a timing disorder problem of the existing technical solution caused by a change of the phase of the output signal after directly performing state switching on the target object, thereby improving circuit performance (for example, it can be ensured that no phase shift problem is caused while effectively reducing DAC power consumption in the TDD mode).

The state switching method provided in the embodiments of the present disclosure may be executed by any electronic device that is desired to achieve signal synchronization (i.e., phase alignment) after subjected to state switching, such as a terminal device or a server, and the terminal device may include, but is not limited to, an in-vehicle device, User Equipment (UE), a mobile device, a computing device, and a wearable device. For example, the terminal device includes, but is not limited to, a cellular phone, a cordless phone, a Personal Digital Assistant (PDA), and a portable computer. The state switching method may be implemented by a processor calling computer-readable program instructions stored in a storage device or may be implemented by a server.

The embodiments of the present disclosure are applicable to, but are not limited to, a multi-clock domain low-power circuit system.

The technical solutions provided in the embodiments of the present disclosure will be described in detail below.

The embodiments of the present disclosure overcome the problem in the related technology that the frequency division clock cannot be turned off to further reduce power consumption due to uncertainty of the phase of the frequency division clock when the clock operates in the TDD mode, and provide a method for automatically sending a reset signal to a clock frequency division circuit for resetting in the TDD mode, so as to ensure that the frequency division clock is not subjected to phase shift in different operating time slots in the TDD mode. The main inventive concept is as follows: in order to solve the contradiction between the uncertainty of the starting time of the normal operating time slot and desired certainty of the phase of the frequency division clock after the clock is restored in the TDD mode, phase information of a reset signal during initialization of a DAC needs to be saved, the reset signal during the initialization is used to reset a frequency division circuit, and the reset signal is saved at a phase of an output clock of a frequency divider; then, an operating time slot start signal of a transmitter is sampled with the frequency division clock having a specified phase to obtain a time slot start signal having a definite phase; finally, the time slot start signal is used to generate a reset signal, a transmission path of the reset signal is multiplexed, the frequency division circuit is reset to obtain the frequency division clock having a phase the same as that during the initialization of the DAC. In this way, when the system operates in the TDD mode, the frequency division clock can be turned off in an operating time slot of a receiver, and the reset signal can be automatically sent to the frequency divider after switching to the operating time slot of the transmitter to ensure no change of a clock and data phase relationship among a switch driver, a serializer, and a decoder, so that it can be ensured that no phase shift problem is not caused while effectively reducing power consumption of the DAC in the TDD mode.

An embodiment of the present disclosure provides a state switching method, as shown in FIG. 3, the method may include operations S11 to S14:
S11, generating and maintaining a state switching signal in a case where a preset state switching condition is met;
S12, performing state switching on a target object with the state switching signal;
S13, calculating a time interval between a current time and an end time of a synchronization alignment signal, with the synchronization alignment signal being a signal applied to the target object earlier than the state switching signal; and
S14, in a case where the time interval meets a preset condition, ending the state switching signal to complete the state switching on the target object, with the preset condition including: the time interval being an even multiple of a first clock period, and the first clock period being a clock period of an output signal of the target object.

In the embodiment of the present disclosure, the output signal of the target object may be a frequency-divided signal of a reference clock synchronization signal.

In the embodiment of the present disclosure, the state switching may include, but is not limited to, resetting a circuit and/or a device, and switching a circuit and/or a device from a sleep mode to an operating mode (that is, waking up the circuit and/or the device from a sleep state). The state switching operation may vary in different application scenarios, and detailed state switching operations will not be limited herein.

In the embodiment of the present disclosure, the state switching condition may include, but is not limited to, receiving state switching instruction information of the target object and/or reaching a preset state switching period.

In the embodiment of the present disclosure, the state switching condition may be receiving certain instruction information, such as receiving the state switching instruction information sent by a control system for performing state switching on the target object; or the state switching condition may be clock information set for automatically performing state switching. For example, the state switching condition is a set state switching period, and the state switching signal is automatically generated and maintained when the state switching period is reached.

In the embodiment of the present disclosure, the state switching condition, the state switching instruction information, and the state switching period may vary in different application scenarios, and detailed conditions will not be limited herein. For example, in a scenario of automatically waking up a frequency divider from a sleep mode when a DAC operates in the TDD mode, the state switching instruction information may include: wake-up instruction information of the target object (e.g., a frequency divider); and state switching period may include: a sleep-mode wake-up period.

In the embodiment of the present disclosure, the synchronization alignment signal may be a synchronization signal which is applied to the target object at any time for performing phase alignment on the target object. For example, the synchronization alignment signal may include, but is not limited to, a synchronization signal applied when the target object is initially powered on (i.e., during initialization), or a synchronization signal which is applied to the target object based on any preset synchronization period.

In the embodiment of the present disclosure, the target object may be any electronic device desired to perform signal synchronization (i.e., phase alignment). For example, the target object includes, but is not limited to, the frequency divider (Divider).

In the embodiment of the present disclosure, the first clock period is a clock period of the output signal of the target object, and in a case where the target object is a frequency divider, the output signal of the target object is a frequency-divided signal of the reference clock synchronization signal, the first clock period may include, but is not limited to, a divide-by-2 clock period, a divide-by-4 clock period, a divide-by-6 clock period, ..., and the first clock period may be a clock period of any frequency-divided signal.

In the embodiment of the present disclosure, the target object, the state switching signal, and the synchronization alignment signal may be used as a different signal in response to different application scenarios, and detailed signals are not limited herein. For example, in the scenario of automatically waking up the frequency divider from the sleep mode when the DAC operates in the TDD mode, the target object includes the frequency divider, and the state switching signal may include: a first reset signal for waking up the frequency divider; and the synchronization alignment signal may include: a second reset signal for performing phase alignment on a frequency-divided signal output by the frequency divider.

In the embodiment of the present disclosure, the technical solution provided in the embodiment of the present disclosure is described below by taking a case where the target object is the frequency divider (Divider) and the first clock period of the output signal of the frequency divider (Divider) is a divide-by-2 clock period as an example.

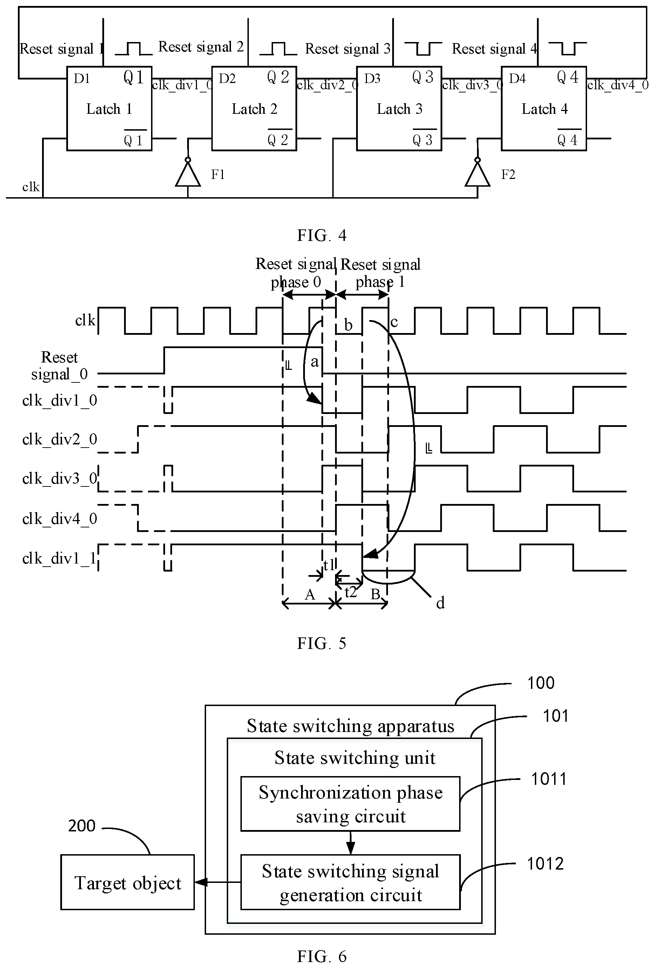

In the embodiment of the present disclosure, as shown in FIG. 4 which is a schematic structural diagram of a quadrature divide-by-2 frequency divider, the quadrature divide-by-2 frequency divider (Divider) includes four high-level-triggered latches (e.g., latch 1, latch 2, latch 3, and latch 4) and two inverters (e.g., F1 and F2). FIG. 5 is a timing diagram of the frequency divider shown in FIG. 4. The problem raised by the technical solution provided in the embodiment of the present disclosure is analyzed below based on FIG. 4 and FIG. 5.

In the embodiment of the present disclosure, assuming that the frequency divider (Divider) is in a state of being woken from the sleep mode with a reset signal, at this time, a reset signal reset_0 (high level) is applied to the frequency divider (Divider), and the reset signal reset_0 may be labelled as reset 1, reset 2, reset 3, and reset 4 corresponding to latch 1, latch 2, latch 3, and latch 4, respectively. The reset signal reset 1 of latch 1 and the reset signal reset 2 of latch 2 are both at a high level, so that output signals of latch 1 and latch 2 are also reset to a high level when latch 1 and latch 2 are reset (such as being woken up from the sleep mode) with the reset signals reset 1 and reset 2 respectively, that is, the output signal clk_div1_0 of latch 1 and the output signal clk_div2_0 of latch 2 are both at a high level. The reset signal reset 3 of latch 3 and the reset signal reset 4 of latch 4 are both at a low level, so that output signals of latch 3 and latch 4 are also reset to a low level when latch 3 and latch 4 are reset with the reset signals reset 3 and reset 4 respectively, that is, the output signal clk_div3_0 of latch 3 and the output signal clk_div4_0 of latch 4 are both at a low level.

In the embodiment of the present disclosure, as shown in FIG. 5, during the existence of the reset signal reset_0, the output of each latch (latch 1, latch 2, latch 3, and latch 4) is reset to the above level value (clk_div1_0 and clk_div2_0 are at a high level, and clk_div3_0 and clk_div4_0 are at a low level). At an end time a of the reset signal reset_0, latch 1 and latch 3 are just in a high level period (as shown by a time period t1) of a clock signal clk. Based on a principle of latches, when the high-level clock signal clk is input to latch 1 and latch 3, input ports D1 and D2 of latch 1 and latch 3 sample output ports Q4 and Q2 of latch 4 and latch 2, respectively, which are connected to the input ports D1 and D2, and output ports Q1 and Q3 of latch 1 and latch 3 output sampling results. At this time, since the reset signal reset 4 is at a low level, the output signal clk_div4_0 of latch 4 is at a low level, that is, clk_div4_0=0, and a sample value obtained by latch 1 sampling the output port Q4 meets D1=0, so that the output signal clk_div1_0 from the output port Q1 meets clk_div1_0=0. Similarly, since the reset signal reset 2 is at a high level, the output signal clk_div2_0 of latch 2 is at a high level, that is, clk_div2_0=1, and a sample value obtained by latch 3 sampling the output port Q2 meets D3=1, so that the output signal clk_div3_0 from the output port Q3 meets clk_div3_0=1. Since a phase of the clock signal clk for latch 2 and latch 4 is opposite to that of the clock signal clk for latch 1 and latch 3, based on the principle of latches, the clock signal clk for latch 2 and latch 4 is at a low level, latch 2 and latch 4 are in a latched state, and latch the previous output signals (i.e., the level values of the reset signals reset 2 and reset 4), that is, clk_div2_0=1 and clk_div4_0=0, and the output level values of latch 2 and latch 4 are kept the same as the level values of the reset signals reset 2 and reset 4. Thus, after the reset signal reset_0 (high level) ends, the level values of the output signals clk_div1_0 and clk_div3_0 are respectively inverted to a low level (clk_div1_0=0) and a high level (clk_div3_0=1) , as shown by the timing corresponding to clk_div1_0 and clk_div3_0 in the time period t1 in FIG. 5.

In the embodiment of the present disclosure, the clock signal clk then enters a low level period (as shown by a time period t2), due to the existence of the inverters F1 and F2, the high-level clock signal clk is input to latch 2 and latch 4 at this time, then based on the principle of latches, input ports D2 and D4 of latch 2 and latch 4 respectively sample the output ports Q1 and Q3 of latch 1 and latch 3 which are connected to the input ports D2 and D4, and the output ports Q2 and Q4 of latch 2 and latch 4 output sampling results. As can be known from the principle of latches, at this time, the low-level clock signal clk is input to latch 1 and latch 3, latch 1 and latch 3 are in a latched state, and latch the previous output signals, that is, Q1=clk_div1_0=0 and Q3=clk_div3_0=1, then a sample value obtained by the sampling of the input port D2 of latch 2 meets D2=Q1=clk_div1_0=0, a sample value obtained by the sampling of the input port D4 of latch 4 meets D4=Q3=clk_div3_0=1, and the output ports Q2 and Q4 of latch 2 and latch 4 output the sampling results Q2=D2=Q1=clk_div1_0=0 and Q4=D4=Q3=clk_div3_0=1, respectively. Thus, the output level values of latch 2 and latch 4 are also inverted. In this way, the output level values of all the latches (latch 1, latch 2, latch 3, and latch 4) are inverted, and as can be seen from FIG. 5, the first clock period of the output signal of each latch is twice a clock period of the clock signal clk, and a phase of the output signal of each latch is opposite to that of the output signal of the previous-stage latch, thereby realizing a quadrature divide-by-2 function.

In the embodiment of the present disclosure, it may be assumed based on the above analysis that the following two types of reset signals (assuming that both reset signals are at a high level and merely differ in phase) are input to the frequency divider (Divider): with a falling edge of the clock signal clk input to the frequency divider (Divider) as a boundary (as shown by the falling edge of clk at the dashed line b in FIG. 5), the reset signals may be classified into two types of phases, a time period which is on the left of the dashed line b and does not exceed a next falling edge may be used as a reset signal phase zero (Reset phase 0), and a time period which is on the right of the dashed line b and does not exceed a next falling edge may be used as a reset signal phase one (Reset phase 1). The reset signal phase zero (Reset phase 0) ends when the clock signal clk is in the high level period, the level values of the output signals of the latches latch 1 (clk_div1_0) and latch 3 (clk_div3_0) are both inverted (corresponding to a curve ① in FIG. 5, and as shown by the time period t1), latch 1 (clk_div1_0) is inverted from the high level caused by the initial reset signal to the low level, that is, clk_div1_0=0, latch 3 (clk_div3_0) is inverted from the low level caused by the initial reset signal to the high level, that is, clk_div3_0=1, and both latch 2 and latch 4 output the reset level values. Here, comparison is performed merely with the output signal of latch 1 as an example, and the output clk_div1_0=0 of latch 1 is recorded in a case where the reset signal phase zero (Reset phase 0) is applied to the frequency divider (Divider).

In the embodiment of the present disclosure, in a case where the reset signal phase one (Reset phase 1) is applied to the frequency divider (Divider), the reset signal phase one (Reset phase 1) lasts from the low level period of the clock signal clk to the end of the high level period (i.e., at a position c), latch 1 and the latch 3 are also inverted in the high level period of the clock signal clk (corresponding to a curve ② in FIG. 5), that is, during the application of the reset signal phase one (Reset phase 1), the clock signal clk reaches a high level, latch 1 also collects the output result of latch 4, and the output result of latch 4 is the level (low level) of the reset signal reset 4, so that the output of latch 1 is also clk_div1_1=0 (corresponding to the curve ② in FIG. 5).

In the embodiment of the present disclosure, since the reset signal phase zero (Reset phase 0) is already applied in a time period A, as can be seen from a region d, based on the applied reset signal phase zero (Reset phase 0), the output signal of latch 1 is at a high level, that is, clk_div1_0=1. However, after the reset signal phase one (Reset phase 1) is applied in a time period B, the output signal of latch 1 is at a low level, that is, clk_div1_1=0. Therefore, for latch 1, the output clk_div1_0 when the reset signal phase zero (Reset phase 0) is applied is exactly opposite to the output clk_div1_1 when the reset signal phase one (Reset phase 1) is applied, which inevitably causes a circuit timing disorder. Since there is one falling edge between an end position of the reset signal phase zero (Reset phase 0) and an end position of the reset signal phase one (Reset phase 1), such as the falling edge b, that is, an odd number of falling edges, it may be concluded that if there are an odd number of falling edges between end positions of two adjacent reset signals, output signals of a same latch are opposite in phase. For a divide-by-2 frequency divider, one falling edge of the clock signal clk represents one divide-by-2 clock period. Therefore, if a time interval between end times of two adjacent reset signals is equal to an odd number of divide-by-2 clock periods, phases of output signals of the divide-by-2 frequency divider are opposite to each other. On the contrary, if the time interval between the end times of the two adjacent reset signals is equal to an even number of divide-by-2 clock periods, the phases of the output signals of the divide-by-2 frequency divider are the same as each other.

In the embodiment of the present disclosure, to sum up, in order to ensure that the clock periods of the output signals of the divide-by-2 frequency divider are the same in phase during a plurality of times of resetting, it is desired to ensure that the time interval between the end times of any two adjacent reset signals is 2*k*T, with k being a positive integer and T being a clock period of a divide-by-2 signal. This technical solution is applicable to any scenario where a plurality of reset signals are applied to the divide-by-2 frequency divider, and can be further applicable to scenarios where any frequency divider such as a divide-by-4 frequency divider, a divide-by-6 frequency divider, or a divide-by-8 frequency divider is applied with a plurality of reset signals. Unlike the application to the divide-by-2 frequency divider, for different frequency-divided signals, T in 2*k*T which is the time interval between the end times of any two adjacent reset signals varies. If for a divide-by-4 signal, T is a clock period of the divide-by-4 signal; if for a divide-by-6 signal, T is a clock period of the divide-by-6 signal, and so on. As can be seen, T is the clock period of the frequency-divided signal output by the frequency divider, i.e., the above first clock period, that is, the time interval between the end times of any two adjacent reset signals is an even multiple of the first clock period.

In the embodiment of the present disclosure, in a case where the number of target objects is one and the one target object generates one output signal, the even multiple is any even multiple of the first clock period.

In a case where the number of target objects is one or more, the number of output signals generated by the one or more target objects is m, and the number of types of first clock periods is n, the even multiple is any even multiple of a second clock period, with the second clock period being a clock period corresponding to frequency division of the least common multiple of frequency division ratios corresponding to the n types of first clock periods, m and n being positive integers greater than 1, and m being greater than or equal to n.

In the embodiment of the present disclosure, still taking the target object being a frequency divider as an example, if there is merely one frequency divider to be reset currently and the frequency divider generates merely one type of frequency-divided signal, for example, the frequency divider merely generates a divide-by-4 frequency-divided signal, then when the frequency divider is reset with two adjacent reset signals, in order to ensure no change of phases of frequency-divided signals output by the frequency divider, the condition of the time interval between the end times of the two reset signals being any even multiple of a clock period of the divide-by-4 signal needs to be met, such as 2 times, 4 times, or 6 times.

In the embodiment of the present disclosure, if there is merely one frequency divider to be reset currently and the frequency divider generates a plurality of types of frequency-divided signals, for example, the frequency divider generates a divide-by-4 frequency-divided signal and a divide-by-6 frequency-divided signal, then when the frequency divider is reset with two adjacent reset signals, in order to ensure no change of phases of all types of frequency-divided signals output by the frequency divider, the condition of the time interval between the end times of the two reset signals being an even multiple of a clock period of the divide-by-4 signal and also an even multiple of a clock period of the divide-by-6 signal needs to be met. In order to meet the condition, the time interval is set to any even multiple of a clock period of a frequency-divided signal (i.e., a divide-by-12 signal) corresponding to the least common multiple of the divide-by-4 signal and the divide-by-6 signal.

In the embodiment of the present disclosure, if there are a plurality of frequency dividers to be reset currently and each frequency divider generates one type of frequency-divided signal, then when the plurality of frequency dividers are reset with one reset signal, the time interval between the end times of two adjacent reset signals also needs to be set to any even multiple of a clock period of a frequency-divided signal corresponding to the least common multiple of the plurality of types of frequency-divided signals. For example, if two frequency dividers generate a divide-by-4 frequency-divided signal and a divide-by-8 frequency-divided signal respectively, the time interval is set to any even multiple of a clock period of a frequency-divided signal (i.e., the divide-by-8 signal) corresponding to the least common multiple of the divide-by-4 signal and the divide-by-8 signal.

In the embodiment of the present disclosure, through the above technical solutions provided in the embodiment, the technical solutions provided in the embodiment of the present disclosure are applicable to a plurality of scenarios, which expands an application range of the technical solutions.

In the embodiment of the present disclosure, before calculating the time interval between the current time and the end time of the synchronization alignment signal applied to the target object, the method may further include:
receiving the synchronization alignment signal; and
continuously generating a synchronization phase signal from the end time of the synchronization alignment signal, with a clock period of the synchronization phase signal being used for calculation of the time interval, the clock period of the synchronization phase signal being the first clock period or the second clock period, and the time interval being an even multiple of the clock period of the synchronization phase signal.

In the embodiment of the present disclosure, the state switching signal may be regarded as a reset signal 1, and the synchronization alignment signal may be regarded as a reset signal 2. Since the synchronization alignment signal is a standard synchronization signal for phase alignment of the output signal of the target object, in order to still achieve phase alignment of the output signal of the target object any time the target object is subsequently subjected to state switching (such as waking up the target object), the synchronization alignment signal (i.e., the reset signal 2) may be saved, especially the end time of the reset signal 2. For example, timing may be started at the end time of the reset signal 2, a clock period adopted for the timing may be the same as the clock period of the output signal of the target object, that is, the same as the first clock period. For example, if the target object outputs a divide-by-2 signal, the clock period for the timing is also a clock period of the divide-by-2 signal; if the target object outputs a divide-by-6 signal, the clock period for the timing is also a clock period of the divide-by-6 signal. Similarly, if the target object output a plurality of types of frequency-divided signals, which, for example, include a divide-by-2 signal, a divide-by-6 signal, and a divide-by-8 signal, then the clock period for the timing is a clock period of a frequency-divided signal corresponding to the least common multiple (the least common multiple of 2, 6, and 8 is 24) of frequency division ratios of the divide-by-2 signal, the divide-by-6 signal, and the divide-by-8 signal, i.e., a clock period (i.e., the second clock period) of a divide-by-24 signal.

In the embodiment of the present disclosure, the timing may be implemented by the frequency divider, that is, after receiving the synchronization alignment signal, the frequency divider starts to operate from the end time of the synchronization alignment signal to continuously generate a frequency-divided signal (e.g., the above divide-by-24 frequency-divided signal) as the synchronization phase signal.

In the embodiment of the present disclosure, upon the determination of the time interval based on the synchronization phase signal, since the clock period of the synchronization phase signal is the first clock period or the second clock period, the time interval may be directly determined based on an even multiple of the clock period of the synchronization phase signal, that is, it is determined by calculation whether the time interval between the current time and the end time of the synchronization alignment signal is an even multiple of the clock period of the synchronization phase signal.

In the embodiment of the present disclosure, based on the above technical solutions provided in the embodiment, accuracy of the end time of the reset signal 1 is ensured by generating the synchronization phase signal and determining the time interval based on the clock period of the synchronization phase signal.

An embodiment of the present disclosure further provides a state switching apparatus 100 as shown in FIG. 6, which may include: a state switching unit 101, which is configured to implement the above state switching method.

In the embodiment of the present disclosure, the state switching unit 101 may include: a synchronization phase saving circuit 1011 and a state switching signal generation circuit 1012.

The state switching signal generation circuit 1012 is configured to generate and maintain a state switching signal in a case where a preset state switching condition is met.

The state switching signal generation circuit 1012 is further configured to perform state switching on a target object 200 with the state switching signal.

The synchronization phase saving circuit 1011 is configured to calculate a time interval between a current time and an end time of a synchronization alignment signal, with the synchronization alignment signal being a signal applied to the target object earlier than the state switching signal.

The state switching signal generation circuit 1012 is further configured to end the state switching signal to complete the state switching on the target object 200 in a case where the time interval meets a preset condition, with the preset condition including, but not limited to, the time interval being an even multiple of a first clock period, and the first clock period being a clock period of an output signal of the target object 200.

In the embodiment of the present disclosure, a signal output terminal of the synchronization phase saving circuit 1011 is connected to a first signal input terminal of the state switching signal generation circuit 1012.

A signal output terminal of the state switching signal generation circuit 1012 is connected to a signal input terminal of the target object 200.

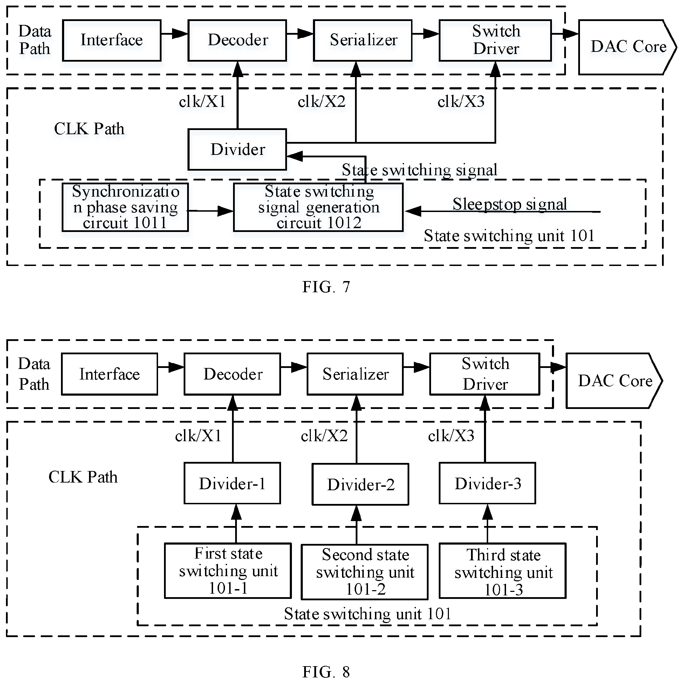

In the embodiment of the present disclosure, as shown in FIG. 7, the target object 200 may include, but is not limited to, a frequency divider (Divider), which may, for example, provide ×1 frequency division for a decoder (Decoder), provide ×2 frequency division for a serializer (Serializer), and provide ×3 frequency division for a switch driver (Switch Driver). The frequency divider (Divider) may include a first frequency divider (for performing ×1 frequency division) corresponding to the decoder (Decoder), a second frequency divider (for performing ×2 frequency division) corresponding to the serializer (Serializer), and a third frequency divider (for performing ×3 frequency division) corresponding to the switch driver (Switch Driver); or, the frequency divider (Divider) may perform a plurality of types of frequency divisions: ×1 frequency division, ×2 frequency division, ×3 frequency division, etc. The frequency divider is connected to one state switching unit 101, and synchronization of a plurality of types of frequency-divided signals (×1 frequency division, ×2 frequency division, and ×3 frequency division) may be achieved with the one state switching unit 101.

In the embodiment of the present disclosure, as shown in FIG. 8, the frequency divider (Divider) as the target object 200 may be a frequency divider generating merely one type of frequency-divide signal. For example, the frequency divider (Divider) may be the first frequency divider (Divider-1) alone, the first frequency divider (Divider-1) is connected to one first state switching unit 101-1, and synchronization of the frequency-divided signal (×1 frequency division) of the first frequency divider (Divider-1) is achieved with the one first state switching unit 101-1; or, the frequency divider (Divider) may be the second frequency divider (Divider-2) alone, the second frequency divider (Divider-2) is connected to one second state switching unit 101-2, and synchronization of the frequency-divided signal (×2 frequency division) of the second frequency divider (Divider-2) is achieved with the one second state switching unit 101-2; or, the frequency divider (Divider) may be the third frequency divider (Divider-3) alone, the third frequency divider (Divider-3) is connected to one third state switching unit 101-3, and synchronization of the frequency-divided signal (×3 frequency division) of the third frequency divider (Divider-3) is achieved with the one third state switching unit 101-3. The state switching unit 101 includes the first state switching unit 101-1, the second state switching unit 101-2, and the third state switching unit 101-3. The first state switching unit 101-1, the second state switching unit 101-2, and the third state switching unit 101-3 includes: the synchronization phase saving circuit 1011 and the state switching signal generation circuit 1012.

In the embodiment of the present disclosure, the synchronization phase saving circuit 1011 is in a continuous operation state; when the target object 200 needs to be subjected to state switching, the state switching signal generation circuit 1012 may generate the state switching signal (which may be regarded as a first reset signal, such as the above reset signal 1), the state switching signal is applied to the target object 200, and the time interval calculated by the synchronization phase saving circuit 1011 based on a clock period of the synchronization phase saving circuit 1011 is obtained; and the time interval may refer to a duration between the end time of the synchronization alignment signal applied to the target object 200 when the target object 200 is subjected to signal phase alignment last time and an end time of the state switching signal, and the time interval is desired to meet the condition that the time interval is an even multiple of the first clock period of the output signal of the target object 200, so as to ensure no change of a phase of the output signal after the target object 200 is subjected to state switching, that is, to maintain signal phase synchronization. In order to achieve signal synchronization of the target object 200 after the state switching (such as waking up the target object 200 to switch the target object 200 from a sleep mode to an operating mode, for example, the target object 200 is woken up with a wake-up signal (i.e., Sleepstop signal)), the time interval is calculated, and in a case where the time interval is an even multiple of the first clock period, the state switching signal is ended to complete the state switching on the target object 200.

In the embodiment of the present disclosure, in a case where the state switching condition includes state switching instruction information of the target object, the state switching signal generation circuit 1012 further includes: a second signal input terminal.

The second signal input terminal is configured as an input terminal of the state switching instruction information.

In the embodiment of the present disclosure, the target object 200 may be subjected to state switching in response to external state switching instruction information (e.g., a wake-up signal (i.e., Sleepstop signal)), and the state switching signal generation circuit 1012 receives the state switching instruction information through the second signal input terminal, and generates the state switching signal based on the state switching instruction information.

In the embodiment of the present disclosure, the target object 200 may also be subjected to state switching based on a preset state switching period, and the state switching signal generation circuit 1012 receives an output signal of the synchronization phase saving circuit 1011 through the first signal input terminal, calculates a duration based on a clock period of the output signal, and generates the state switching signal in a case where the calculated duration reaches the state switching period.

In the embodiment of the present disclosure, after the state switching signal is generated and applied to the target object 200, the time interval may be calculated, and in a case where the time interval is an even multiple of the first clock period, the state switching signal is ended to complete the state switching on the target object 200.

In the embodiment of the present disclosure, after the state switching on the target object 200 is completed, phases of output signals of the decoder (Decoder), the serializer (Serializer), the switch driver (Switch Driver), and the synchronization phase saving circuit 1011 (equivalent to one frequency divider) shown in FIG. 7 and FIG. 8 are all synchronous.

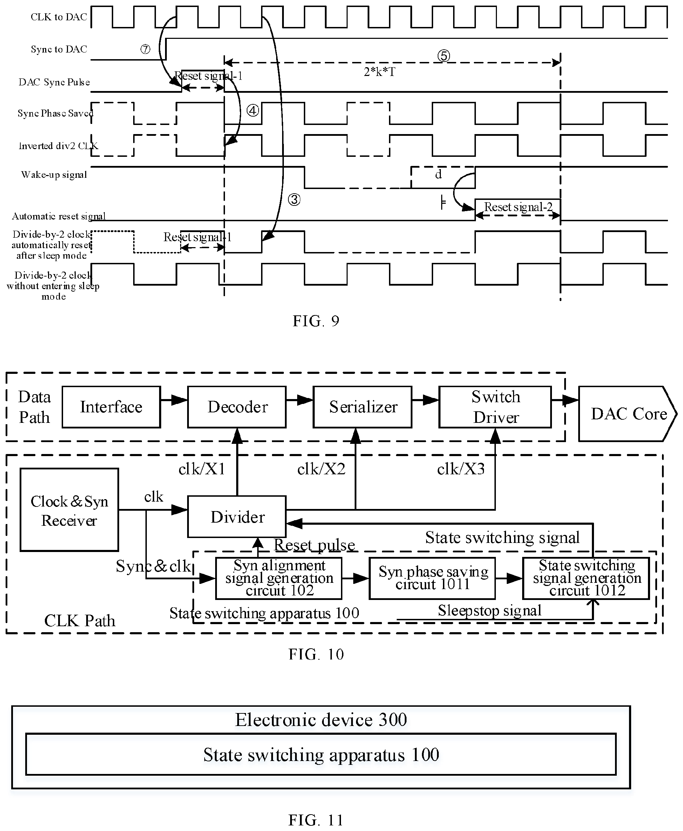

In the embodiment of the present disclosure, as shown in FIG. 9, the technical solution provided in the embodiment of the present disclosure is described by taking a case where a divide-by-2 frequency divider is automatically reset (switched from a sleep mode to an operating mode) in the TDD mode as an example. At this time, the synchronization phase saving circuit 1011 also adopts divide-by-2 frequency division, and a curve ③ in FIG. 9 represents that an output clock of the target object 200 starts synchronizing after the target object 200 (a divide-by-2 circuit) is subjected to synchronization alignment with the synchronization alignment signal (which may also be referred to as a reset signal, the reset signal such as a reset signal (DAC Sync Pulse) is used for synchronization alignment, and may be simply denoted by reset-1). At this time, upon the reception of the synchronization alignment signal, the synchronization phase saving circuit 1011 starts to operate to continuously generate the state switching signal (as shown by a signal (Sync Phase Saved) in FIG. 9, which is also a divide-by-2 signal), and an inverted divide-by-2 output clock (Inverted div2 CLK) corresponding to the state switching signal may be saved. As shown by a curve ④ in FIG. 9, a falling edge of the synchronization alignment signal is saved in a rising edge of the inverted divide-by-2 output clock (Inverted div2 CLK) after synchronization alignment (that is, the state switching signal generated by the synchronization phase saving circuit 1011 may be aligned with the synchronization alignment signal based on the rising edge of the inverted divide-by-2 output clock (Inverted div2 CLK), a clock period of the divide-by-2 signal is started, and the divide-by-2 signal is continuously generated). As shown by a curve ⑤ in FIG. 9, a time interval between the rising edge of the inverted divide-by-2 output clock (Inverted div2 CLK) and a falling edge of the state switching signal (which may be regarded as the other reset signal, such as a reset signal auto reset) is 2*k*T, with k being a positive integer and T being a divide-by-2 clock period of the frequency divider.

In the embodiment of the present disclosure, in the state switching signal generation circuit 1012 (also referred to as an automatic synchronous pulse generation circuit Sync Pulse Auto Gen), the inverted divide-by-2 output clock (Inverted div2 CLK) is used to sample a rising edge (at the end of the sleep mode of a transmitter) of a sleep-mode wake-up signal (Sleepstop signal), and the state switching signal (also referred to as a reset signal, as shown by reset-2 in an automatic reset signal auto reset) away from the falling edge of the synchronization alignment signal (reset-1) by 2*k*T, as shown by a curve ⑥ in FIG. 9. Thus, as long as there is a rising edge of a state switching prompt signal (such as the wake-up signal (Sleepstop signal)), one state switching signal (reset-2) is automatically generated, and a time interval between an end time, also called a falling edge, of the state switching signal (reset-2) and the synchronization alignment signal (reset-1) is 2*k*T, so that signal synchronization is achieved after a divide-by-2 clock (div2 clk with sleep mode) which is automatically reset after the sleep mode performs state switching (e.g., resetting) based on the state switching signal (reset-2). The dashed line d of the wake-up signal (Sleepstop signal) represents that the state switching signal (reset-2) may not be generated immediately after the wake-up signal (Sleepstop signal) is detected (such as detecting a rising edge of the wake-up signal (Sleepstop signal)), and the state switching signal (reset-2) may be generated within a preset duration after the rising edge of the wake-up signal (Sleepstop signal) is detected.

In the embodiment of the present disclosure, as can be seen from FIG. 9, a phase of the divide-by-2 clock (div2 clk with sleep mode) which is automatically reset after the sleep mode is the same as a phase of a divide-by-2 clock (div2 clk without sleep mode) not entering a sleep state. Therefore, by saving the phase of the synchronization alignment signal (such as saving the falling edge at the end time of the synchronization alignment signal), and automatically resetting the frequency divider based on the time interval meeting the preset condition after the sleep mode is ended, the clock frequency division circuit can be turned off in the TDD mode to reduce power consumption, a clock phase relationship in each clock domain does not change.

In the embodiment of the present disclosure, as shown in FIG. 10, the state switching apparatus 100 may further include: a synchronization alignment signal generation circuit 102.

A signal input terminal of the synchronization alignment signal generation circuit 102 serves as an input terminal of a reference clock synchronization signal; and the first clock period may be obtained by performing frequency division on a clock period of the reference clock synchronization signal.

A signal output terminal of the synchronization alignment signal generation circuit 102 is connected to the signal input terminal of the target object 200 and/or a signal input terminal of the synchronization phase saving circuit 1011.

The synchronization alignment signal generation circuit 102 is configured to generate the synchronization alignment signal.

In the embodiment of the present disclosure, the synchronization alignment signal generation circuit 102 may serve as a clock and synchronization signal receiver (Clock&Sync Receiver) to receive a clock signal and a synchronization signal from a PLL, such as a clock signal (CLK to DAC) and a synchronization signal (Sync to DAC) shown in FIG. 9. The clock signal (CLK to DAC) and the synchronization signal (Sync to DAC) may be transmitted to the synchronization alignment signal generation circuit 102 (for example, the synchronization alignment signal generation circuit 102 may be an initialization synchronization pulse generation module (Initial Sync Pulse Gen), and may be configured to generate an initial reset signal during initialization, and the initial reset signal may be used as the synchronization alignment signal), and a reset pulse such as the reset signal (DAC Sync Pulse) shown in FIG. 9 is generated, with the reset pulse being the above signal reset-1, and a curve ⑦ representing a clock edge when the reset pulse is generated.

In the embodiment of the present disclosure, in a case where the signal output terminal of the synchronization alignment signal generation circuit 102 is connected to the signal input terminal of the target object and the signal input terminal of the synchronization phase saving circuit 1011:
the synchronization alignment signal generation circuit 102 is further configured to apply the synchronization alignment signal to the target object 200 to perform phase synchronization on the first clock period of the target object 200; and
the synchronization phase saving circuit 1011 is further configured to receive the synchronization alignment signal, and continuously generate a synchronization phase signal synchronized with the synchronization alignment signal from the end time of the synchronization alignment signal, with the clock period of the synchronization phase signal being the first clock period or a second clock period, the second clock period being a clock period corresponding to frequency division of the least common multiple of frequency division ratios corresponding to n types of first clock periods, and n being a positive integer greater than 1.

In the embodiment of the present disclosure, the synchronization alignment signal generation circuit 102 may be connected to the target object 200 merely during power-on initialization for performing signal alignment on the target object 200, and may be connected to the synchronization phase saving circuit 1011. When signal synchronization needs to be performed for subsequent state switching of the target object 200, signal synchronization may be performed merely with the state switching unit 101.

In the embodiment of the present disclosure, the synchronization alignment signal generation circuit 102 may be merely connected to the synchronization phase saving circuit 1011, and when signal synchronization needs to be performed for subsequent state switching of the target object 200 after the synchronization alignment signal is generated at any time to trigger the synchronization phase saving circuit 1011 to start operating, signal synchronization may be performed on the output signal of the target object 200 just with the state switching unit 101. The phase of the synchronization alignment signal is the same as that of the output signal of the target object 200.

In the embodiment of the present disclosure, as shown in FIG. 8, in a case where one state switching unit 101 is connected to one target object 200 and the target object 200 generates one output signal:
the state switching signal generation circuit 1012 is further configured to end the state switching signal to complete the state switching on the target object in a case where the time interval is any even multiple of the first clock period.

In the embodiment of the present disclosure, if there is merely one target object 200, for example, there is merely one frequency divider, and the frequency divider generates merely one type of frequency-divided signal such as a divide-by-2 signal or a divide-by-4 signal, one state switching unit 101 may be provided for the one target object 200, and the clock period of the synchronization phase saving circuit 1011 in the state switching unit 101 is also the clock period (i.e., the first clock period) of the output signal of the target object 200.

In the embodiment of the present disclosure, as shown in FIG. 7, in a case where one state switching unit 101 is connected to one or more target objects 200, the number of output signals generated by the one or more target objects 200 is m, and the number of types of first clock periods is n,
the state switching signal generation circuit 1012 is further configured to end the state switching signal to complete the state switching on the target object in a case where the time interval is any even multiple of the second clock period, with the second clock period being a clock period corresponding to frequency division of the least common multiple of frequency division ratios corresponding to the n types of first clock periods, m being a positive integer greater than 1, and m being greater than or equal to n.

In the embodiment of the present disclosure, in a case where merely one target object 200 is provided and generates a plurality of types of frequency-divided signals, or in a case where a plurality of target objects 200 (such as m target objects) are provided and generate a plurality of types of frequency-divided signals (such as n types of frequency-divided signals), if signal synchronization is performed with merely one state switching unit 101, the clock period of the synchronization phase saving circuit 1011 in the state switching unit 101 is desired to be a clock period (i.e., the second clock period) corresponding to frequency division of the least common multiple of n types of frequency divisions of the output signals of the target object 200. For example, if the target object 200 outputs four types of frequency-divided signals, e.g., a divide-by-2 signal, a divide-by-4 signal, a divide-by-6 signal, and a divide-by-8 signal, the clock period of the synchronization phase saving circuit 1011 is a clock period of a divide-by-24 signal (24 is the least common multiple of 2, 4, 6, and 8).

In the embodiment of the present disclosure, the synchronization alignment signal may be generated after the system is powered on, and when a device (including the target object 200) in the system is synchronized for the first time, the reset pulse in the synchronization alignment signal is used to reset the frequency divider (i.e., the target object 200), so that clocks at different frequencies have definite synchronized phase information, and the synchronized phase information is saved at an edge of the frequency division clock (that is, when an edge of the reset pulse such as a falling edge is detected, the synchronization phase saving circuit 1011 is started to generate a frequency-divided signal having the same clock period as the output signal of the frequency divider); in an operating time slot of the receiver, the transmitter enters a sleep state, the frequency divider and application circuits inside the DAC are turned off; in a normal operating time slot of the transmitter, the sleep state of the DAC is ended, the state switching signal generation circuit 1012 is used to sample the frequency-divided signal generated by the synchronization phase saving circuit 1011 and regenerate a synchronous pulse (i.e. the state switching signal) to reset the frequency division circuit, and the phase of the frequency divider after reset is the same as the phase of the frequency divider during initialization, so that the phase of the frequency divider after reset is kept consistent with the clock phases in the other clock domains. Through the above process, the frequency divider can be turned off in the TDD mode to reduce power consumption, and meanwhile, it can be ensured that the clock phase relationship in each clock domain does not change.

An embodiment of the present disclosure further provides an electronic device 300 as shown in FIG. 11, which includes the state switching apparatus 100.

In the embodiment of the present disclosure, the electronic device may include, but is not limited to, a DAC.

In the embodiment of the present disclosure, the technical solutions provided in the present embodiment of the present disclosure are applicable to, but are not limited to, a TDD mode, and may also be applicable to other scenarios where synchronization needs to be performed for circuit state switching.

The technical solutions provided in the embodiment of the present disclosure are applicable to, but are not limited to, a DAC circuit, and are also applicable to other circuits in need of synchronization.

The technical solutions provided in the embodiment of the present disclosure are applicable to, but are not limited to, a frequency division circuit (which, for example, may include, but is not limited to, a divide-by-2 circuit, a divide-by-4 circuit, and a divide-by-6 circuit), and may also be applicable to other circuits in need of signal synchronization or resetting.

The synchronization alignment signal in the technical solutions provided in the embodiment of the present disclosure may include, but is not limited to, an initial reset signal, and may be a signal for performing phase alignment at any time.

A method for saving the phase information of the synchronization alignment signal in the technical solutions provided in the embodiment of the present disclosure may have various modifications, a quadrature divide-by-2 frequency division circuit may be adopted, other signals that save synchronization phase information may be adopted, and all circuits in need of phase synchronization may save the synchronous phase information.

A method for automatically sending the synchronization alignment signal in the technical solutions provided in the embodiment of the present disclosure may have various modifications, the method may be implemented by the synchronization alignment signal generation circuit 102, may be implemented by cooperation with the synchronization alignment signal generation circuit 102, may be implemented by cooperation with other circuits that send data information with a definite phase or a fixed phase, or may be implemented by cooperation with other external input signals or a signal generated inside the circuit.

A generation circuit for any frequency-divided signal in the technical solutions provided in the embodiment of the present disclosure may have various modifications, a frequency divider and a shift register may be adopted, but the embodiment of the present disclosure is not limited thereto. A frequency division clock is generated with the frequency divider, and then serial sampling is performed on a frequency-divided clock by using a clock not subjected to frequency division to obtain a multi-phase multi-divided clock; if there is no multi-phase requirement, a single trigger may be directly used for output. The technical solutions provided in the embodiment of the present disclosure may be applied to a generation circuit for an any-phase any-frequency division clock.

In the technical solutions provided in the embodiment of the present disclosure, the synchronization alignment signal is adopted, synchronous sequential logic is adopted, the reset pulse (synchronous alignment pulse) is generated, the clocks in different clock domains are reset, the phase information of the synchronization alignment signal is saved with the frequency division circuit (such as the synchronization phase saving circuit 1011), the reset pulse (i.e., the state switching signal) is automatically generated in the TDD mode, and the frequency division clock with an uncertain phase is reset, so that the clock phase relationship in each clock domain is definite, a phase relationship between data of a serializer and a clock of a switch driver is definite, and the problem of timing errors or metastability caused by the change of the clock phase is avoided. Through the above technical solutions, a switch driving circuit can be turned off and automatically reset.

It should be understood by those of ordinary skill in the art that all or some of the functional modules/units disclosed above may be implemented as software, firmware, hardware, or suitable combinations thereof.

If implemented as hardware, the division between the functional modules/units stated above does not necessarily correspond to the division of physical components; for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH) or other magnetic disk storage, a Compact Disc Read Only Memory (CD-ROM), a Digital Versatile Disc (DVD) or other optical disk storage, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. A state switching method, comprising:
generating and maintaining a state switching signal in a case where a preset state switching condition is met;
performing state switching on a target object with the state switching signal;
calculating a time interval between a current time and an end time of a synchronization alignment signal, wherein the synchronization alignment signal is a signal applied to the target object earlier than the state switching signal; and
ending, in a case where the time interval meets a preset condition, the state switching signal, wherein the preset condition comprises: the time interval being an even multiple of a first clock period, the first clock period being a clock period of an output signal of the target object.

2. The state switching method of claim 1, wherein
in a case where there is one target object and the one target object generates one output signal, the even multiple is any even multiple of the first clock period; and
in a case where there is one or more target objects, the one or more target objects generate m output signals, and the number of types of first clock periods is n, the even multiple is any even multiple of a second clock period, wherein the second clock period is a clock period corresponding to frequency division of a least common multiple of frequency division ratios corresponding to the n types of first clock periods; and m and n are positive integers greater than 1, and m is greater than or equal to n.

3. The state switching method of claim 2, wherein before calculating the time interval between the current time and the end time of the synchronization alignment signal applied to the target object, the method further comprises:
receiving the synchronization alignment signal;
continuously generating a synchronization phase signal from the end time of the synchronization alignment signal;
wherein a clock period of the synchronization phase signal is used for calculation of the time interval; the clock period of the synchronization phase signal is the first clock period or the second clock period; and the time interval is an even multiple of the clock period of the synchronization phase signal.

4. The state switching method of any one of claims 1 to 3, wherein the state switching condition comprises: receiving state switching instruction information of the target object and/or reaching a preset state switching period.

5. The state switching method of claim 4, wherein
the state switching instruction information comprises: wake-up instruction information of the target object;
the state switching period comprises: a sleep-mode wake-up period;
the state switching signal comprises: a first reset signal for waking up the target object; and
the synchronization alignment signal comprises: a second reset signal for performing phase alignment on a frequency-divided signal output by the target object.

6. A state switching apparatus, comprising: a state switching unit, wherein the state switching unit is configured to implement the state switching method of any one of claims 1 to 5.

7. The state switching apparatus of claim 6, wherein the state switching unit comprises: a synchronization phase saving circuit and a state switching signal generation circuit;
the state switching signal generation circuit is configured to generate and maintain a state switching signal in a case where a preset state switching condition is met;
the state switching signal generation circuit is further configured to perform state switching on a target object with the state switching signal;
the synchronization phase saving circuit is configured to calculate a time interval between a current time and an end time of a synchronization alignment signal, wherein the synchronization alignment signal is a signal applied to the target object earlier than the state switching signal; and
the state switching signal generation circuit is further configured to end the state switching signal in a case where the time interval meets a preset condition, wherein the preset condition comprises: the time interval being an even multiple of a first clock period, the first clock period being a clock period of an output signal of the target object.

8. The state switching apparatus of claim 7, wherein
a signal output terminal of the synchronization phase saving circuit is connected to a first signal input terminal of the state switching signal generation circuit; and
a signal output terminal of the state switching signal generation circuit is connected to a signal input terminal of the target object.

9. The state switching apparatus of claim 8, wherein in a case where the state switching condition comprises state switching instruction information of the target object, the state switching signal generation circuit further comprises: a second signal input terminal; and the second signal input terminal is configured as an input terminal of the state switching instruction information.

10. The state switching apparatus of any one of claims 7 to 9, further comprising:
a synchronization alignment signal generation circuit;
a signal input terminal of the synchronization alignment signal generation circuit is configured as an input terminal of a reference clock synchronization signal, wherein the first clock period is obtained by performing frequency division on a clock period of the reference clock synchronization signal;
a signal output terminal of the synchronization alignment signal generation circuit is connected to a signal input terminal of the target object and/or a signal input terminal of the synchronization phase saving circuit; and
the synchronization alignment signal generation circuit is configured to generate the synchronization alignment signal.

11. The state switching apparatus of claim 10, wherein in a case where the signal output terminal of the synchronization alignment signal generation circuit is connected to the signal input terminal of the target object and the signal input terminal of the synchronization phase saving circuit:
the synchronization alignment signal generation circuit is further configured to apply the synchronization alignment signal to the target object to perform phase synchronization on the first clock period of the target object; and
the synchronization phase saving circuit is further configured to receive the synchronization alignment signal, and continuously generate a synchronization phase signal synchronized with the synchronization alignment signal from the end time of the synchronization alignment signal, wherein a clock period of the synchronization phase signal is the first clock period or a second clock period; the second clock period is a clock period corresponding to frequency division of a least common multiple of frequency division ratios corresponding to n types of first clock periods; and n is a positive integer greater than 1.

12. The state switching apparatus of claim 7, wherein in a case where one state switching unit is connected to one target object and the one target object generates one output signal: the state switching signal generation circuit is further configured to end the state switching signal in a case where the time interval is any even multiple of the first clock period.

13. The state switching apparatus of claim 7, wherein in a case where one state switching unit is connected to one or more target objects, a number of output signals generated by the one or more target objects is m, and a number of types of first clock periods is n:
the state switching signal generation circuit is further configured to end the state switching signal in a case where the time interval is any even multiple of a second clock period, wherein the second clock period is a clock period corresponding to frequency division of a least common multiple of frequency division ratios corresponding to the n types of first clock periods; and m is a positive integer greater than 1, and is greater than or equal to n.

14. An electronic device, comprising the state switching apparatus of any one of claims 6 to 13.

15. The electronic device of claim 14, comprising a digital to analog converter.
